# EUROPEAN PATENT SPECIFICATION

(11) **EP 0 365 059 B1**
(45) Date of publication and mention of the grant of the patent: **20.10.1993**
(21) Application number: 89202024.9
(22) Date of filing: 03.08.1989
(51) Int. Cl.: A61C 5/06, A61C 13/12, A61C 13/083

(54) **Refrigerated working surface for dental laboratories**
Gekühlte Arbeitsfläche für zahntechnische Laboratorien
Surface de travail réfrigérée pour laboratoires dentaires

(30) Priority: 28.09.1988 IT 4688088
(43) Date of publication of application: 25.04.1990
(73) Proprietor: BERTLAND S.N.C. DI LANDINI SERGIO & C., I-42019 Scandiano (Reggio Emilia) (IT)
(72) Inventor: Bertani, Paolo, I-42020 Albinea (Reggio Emilia) (IT)
(74) Representative: Corradini, Corrado

(56) References cited:
- DE-A- 3 305 561
- DE-A- 3 630 331
- DE-U- 8 713 614
- US-A- 2 375 254
- US-A- 2 492 479
- US-A- 3 230 723
- US-A- 3 327 713
- US-A- 3 712 072

## Description

The preparation of ceramic powder mixes for dental use, including powdered porcelain and the like, presents technicians with substantial problems deriving from the need to keep such mixes under sufficiently moist conditions to enable them to be worked for an adequate period.

In other words, when the dental technician prepares a ceramic mix he requires the mix not to dry out with the passage of time and not to undergo alteration of its characteristics, to enable him to form it prostheses which possess identical qualities in terms of colour and mechanical consistency.

In preparing said mixes, dental technicians currently use working surfaces of vitreous material, or simply sheets of glass, which rest securely on a support table and can comprise cavities or chambers defining various work regions, each intended to receive a different type of mix to be worked. As stated, this procedure presents the problem that once the mix has been prepared it tends to dry with time and often does not allow the dental technician to complete his work before it loses its characteristics. This means that the dental technician is obliged to continuously prepare small quantities of mix, with the serious difficulty of having to ensure that each small quantity has for example the same colour shade and the same characteristics as the preceding. Otherwise the dental technician is obliged to continuously wet and remix a mix if prepared in greater quantity.

To overcome this drawback it has been suggested to use porous working surfaces which are kept in contact with an underlying source of moisture, but even this method has proved ineffective.

US-A-3 712 072 discloses an apparatus for cooling dental materials having a housing for receiving a plurality of receptacles having therein the dental materials DE-U-8 713 614 discloses a rotary plate. A refrigerated working surface as defined in the preamble of claim 1 is disclosed in DE-A-3 630 331

The object of the present invention patent is to provide for dental technicians a glass working surface for the preparation of ceramic or porcelain mixes which ensures that the desired moisture characteristics are maintained with time, to enable the dental technician to use the mix during successive periods which can be separated by a lengthy time.

This is particularly useful for example for work which has to be continued the following day, and enables the mix prepared the previous day to be used with an absolute assurance of identical results.

This object is attained generally according to the invention by coupling the glass surface to a device for generating cold, so that its temperature can be easily adjusted and maintained at a level such as to reduce evaporation from the mass resting on it, and if required can be adjusted to and maintained at a temperature at which the moisture contained in the surrounding air begins to condense.

According to a particularly convenient embodiment, the invention consists of a glass disc which is maintained or supported at a very small distance from a metal surface, such as of aluminium, having good heat conductivity characteristics, which in its turn is in contact with or integral with the cold side of a Peltier module, ie a thermoelectric element consisting of several parallel couples formed from two joined metals through which direct electric current is passed.

According to the invention, on the hot side of the Peltier module there are provided cooling means of circulating fluid type, such as water, which dissipate the heat which accumulates there after its withdrawal by the cold part of the same element.

The Peltier module according to the invention is enclosed within a suitable insulating mass, such as expanded polystyrene, the glass surface being supported above the metal surface by a central pivot and being of circular shape so that it can be easily rotated about said pivot without compromising heat transfer from the cold element of the Peltier module.

The invention has the double result that not only is the glass working surface maintained at a cold temperature and therefore cools the ceramic or porcelain mix to either prevent or slow down evaporation, but the temperature of said surface and the overlying ceramic mix can be adjusted so that it is below the dew point of the surrounding air to cause moisture condensation, so resulting in further wetting of the ceramic mass.

As the quantity of heat transferred between the cold element and hot element depends on the voltage difference and therefore on the current intensity through the two modules, provision is made for adjusting the device, this being easily done by a rheostat.

The constructional and operational merits and characteristics of the invention will be more apparent from the detailed description given hereinafter with reference to the figures of the accompanying drawings, which illustrate a preferred embodiment thereof by way of non-limiting example.

Figure 1 is an axial section through the invention, with schematic illustration of its operation.

Figure 2 is a plan view of the invention from below.

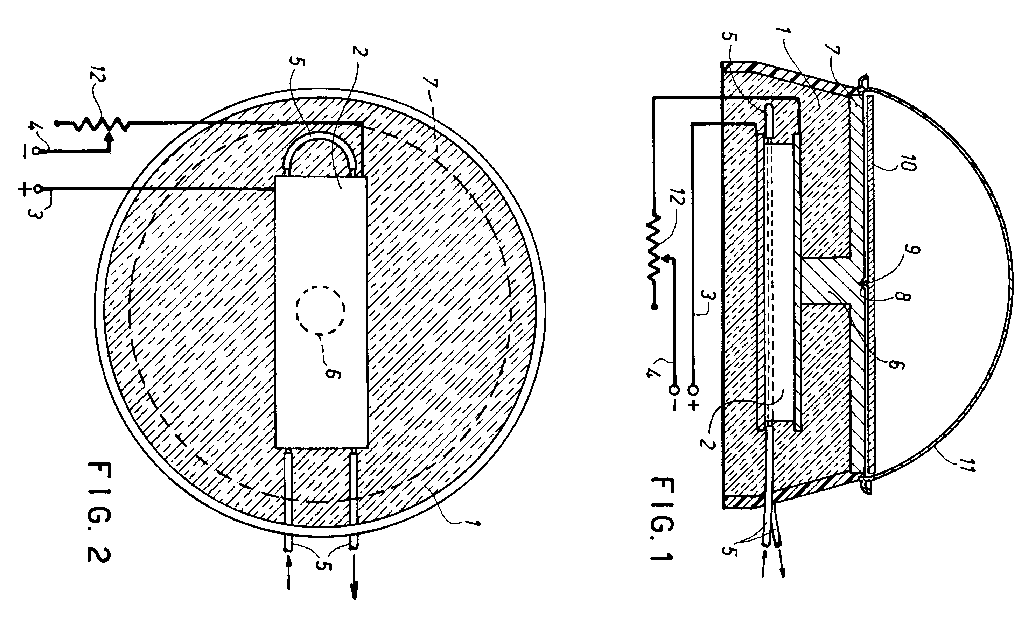

The figures show a base 1 constructed of insulating material such as expanded polyurethane or expanded polystyrene.

Within the base 1 there is embedded a bank 2 of Peltier modules which can be connected either in series or in parallel, each element being fed with direct current through the positive terminal 3 and negative terminal 4.

A pipe 5 passes through the hot part of the Peltier module and is traversed by cooling water fed from the outside, its purpose being to dissipate the heat which accumulates in said hot part.

The upper cold part of the Peltier module is coupled to a support column 6 constructed of aluminium or another good heat conducting material, which on its top supports a plate 7 of the same material.

At its centre the plate 7 comprises a small conical cavity 8 which receives the end of a pivot 9 projecting lowerly from a glass plate 10.

The glass plate 10, which can either be provided with recesses for the material mix or be perfectly flat, represents the working surface for the dental technician, and can be rotated about its central axis without compromising heat transfer between the glass plate 10 and the underlying aluminium plate 7.

The distance between these latter is a few tenths of a millimetre, which allows easy rotation of the plate 10 without negatively affecting heat transfer. A dome-shaped cover 11 can be placed over the plate 10 to allow proper preservation of the material overnight if it is to be used the following day.

The electrical feed circuit of the Peltier module comprises a rheostat 12 which enables the feed voltage and thus the temperature of the plate 10 to be continuously adjusted.

The invention is not limited to the single embodiment described heretofore and illustrated on the accompanying drawings, and modifications and improvements can be made thereto but without leaving the scope of protection of the patent as defined by the following claims.

## Claims

1. A refrigerated working surface for dental products comprising a cold generation means (2) for continuosly adjusting the temperature and maintaining it at the desired value, characterised by comprising:
- a glass plate (10) for the preparation of ceramic or porcelain mixes having a circular and flat shape;
- a circular metal plate (7), which is coupled to the cold generation means (2) and is supporting the glass plate (10) via a central pivot (9) for the rotation of the glass plate (10), the circular metal plate (7) being disposed under the glass plate (10) at a very small distance beneath it.

2. A working surface as claimed in claim 1, characterised in that the cold generation means (2) is a Peltier module, the cold element of which is integral with or in coupled contact with the metal plate (7), and the hot element of which is exposed to a flow of cooling fluid.

3. A working surface as claimed in claims 1 and 2, characterised in that the temperature adjustment means are a rheostat (12) connected into the d.c. feed circuit of the Peltier module.

## Patentansprüche

1. Eine Kühlarbeitsfläche für zahnärztliche Produkte, umfassend ein Mittel (2) zur Kühlerzeugung für die kontinuierliche Temperaturregelung und Beibehaltung auf dem gewünschten Wert, gekennzeichnet durch die Tatsache folgendes zu enthalten:
- eine Glasplatte (10) für die Vorbereitung des Keramik- oder Porzellanamalgams mit runder oder flacher Form;
- eine kreisförmige Metallplatte (7), die alt dem Mittel (2) für die Kühlerzeugung verbunden ist und die Glasplatte (10) durch einen Mittelzapfen (9) für die Drehung der Glasplatte (10) trägt und die unter der Glasplatte (10) mit einem geringen Abstand hierzu untergebracht ist.

2. Eine Arbeitsfläche entsprechend dem Anspruch 1, gekennzeichnet durch die Tatsache, daß das Mittel (2) für die Künlerzeugung aus einem Peltier-Modul, dessen Kühlelement einteilig oder in Verbindungskontakt mit der Metallplatte (7) ist, während das entsprechende warme Element einem Durchfluß der Kühlflüssigkeit ausgesetzt ist.

3. Eine Arbeitsfläche entsprechend den Ansprüchen 1 und 2, gekennzeichnet durch die Tatsache, daß die Mittel der Temperaturregelung aus einem Rheostat (12) bestehen, der an den Gleichstromkreis des Peltier-Moduls angeschlossen ist.

## Revendications

1. Un plan de travail réfrigéré pour produits odonthologiques comprenant un dispositif (2) produisant du froid dans le but de régler la température d' une manière continue et de la maintenir à la valeur désirée, caractérisé par:
- une plaque en verre (10) ronde et plate pour la préparation de l'amalgame de céramique ou de porcelaine;
- une plaque (7) métallique circulaire associée ou dispositif (2) pour la production de froid, qui soutient la plaque on verre (10) au moyen d'un pivot central (9) permettant la rotation de celle-ci et qui se trouve en dessous de la plaque en verre (10) à une très faible distance de cette dernière.

2. Un plan de travail comme dans la revendication 1, caractérisé par le fait que le dispositif (2) de production du froid est constitué par un module Peltier dont l'élément froid est intégral ou en contact d'accouplement avec la plaque métallique (7) alors que l'élément chaud correspondant est exposé à un flux de fluide réfrigérant.

3. Un plan de travail comme dans les revendications 1 et 2, caractérisé par le fait que les dispositifs de réglage de la température sont constitués par un rhéostat (12) relié au circuit d'alimentation continu du module Peltier.
